# FASCICULE DE BREVET EUROPEEN

(11) **EP 2 071 782 B1**
(45) Date de publication et mention de la délivrance du brevet: **27.05.2020**
(21) Numéro de dépôt: 08171137.6
(22) Date de dépôt: 09.12.2008
(51) Int. Cl.: H04L 12/58, H04M 3/53, H04M 3/537, G06Q 10/00

(54) **Dispositif et procédé de mise en oeuvre d'un système de messagerie unifié**
Vorrichtung und Verfahren zum Einsatz eines einheitlichen Nachrichtenübermittlungssystems
Device and method for implementing a unified messaging system

(30) Priorité: 10.12.2007 FR 0759700
(43) Date de publication de la demande: 17.06.2009
(73) Titulaire: Orange, 75015 Paris (FR)
(72) Inventeur: Holysz-Fouquet, Patricia, 14000, CAEN (FR); Foucher, Agnès, 14280, SAINT-CONTEST (FR); Courval, Lionel, 14210, AMAYE SUR ORNE (FR)

(56) Documents cités:
- "Adium - 6 reasons to switch from iChat", INTERNET CITATION , 27 décembre 2006 (2006-12-27), XP002493454, Extrait de l'Internet: URL:http://www.maccast.com/2006/12/27/adiu m-6-reasons-to-switch-from-ichat/ [extrait le 2008-08-28]
- "Quicksilver (software) - Wikipedia, the free encyclopedia", INTERNET CITATION , 9 décembre 2007 (2007-12-09), XP002493429, Extrait de l'Internet: URL:http://en.wikipedia.org/w/index.php?ti tle=Quicksilver_(software)&oldid=176687220 [extrait le 2008-08-26]
- "Skype for Mac OS X", INTERNET CITATION , 9 décembre 2007 (2007-12-09), XP002493428, Extrait de l'Internet: URL:http://web.archive.org/web/20071209215 717/http://www.skype.com/download/skype/ma cosx/ [extrait le 2008-08-26]
- "Yahoo messenger - Wikipedia the free encyclopedia", INTERNET CITATION , 9 décembre 2007 (2007-12-09), XP002493430, Extrait de l'Internet: URL:http://en.wikipedia.org/w/index.php?ti tle=Yahoo!_Messenger&oldid=176839651 [extrait le 2008-08-26]

## Description

L'invention concerne le domaine des télécommunications et plus particulièrement un dispositif et procédé de mise en œuvre d'outils de communication.

Les terminaux informatiques connus sont dotés de nombreux outils de communication, permettant à un utilisateur de communiquer au moyen de différents services de communication à travers au moins un réseau de télécommunication. Parmi les services de communication les plus utilisés, on trouve des services de messagerie électronique, d'envoi de messages courts type SMS (Short Message Service) ou MMS (Multimedia Message Service), d'envoi de fax, de messagerie instantanée ou IM (Instant Messaging), de téléphonie sur IP (Internet Protocol), de visiophonie sur IP, etc.

Ces outils sont particulièrement hétérogènes dans leur conception car ils reposent sur des modes de communication spécifiques à chaque service: par exemple un message instantané ne peut pas être envoyé au moyen d'un outil d'envoi de SMS ou vice-versa. Pour un service donné, le mode de communication repose en effet sur un ou plusieurs protocoles dédiés et sur un ou plusieurs formats de données. En outre, les interfaces utilisateurs de ces outils sont spécifiques à chaque service.

Il en résulte une complexité d'utilisation pour les utilisateurs de terminaux dotés d'une pluralité de tels outils dès lors qu'ils sont amenés à utiliser différents outils pour communiquer de la manière la plus adaptée possible avec une personne ou un groupe de personnes.

Par exemple, le traitement d'une commande de meubles reçue par message électronique d'une secrétaire d'une entreprise de fabrication de meubles, suppose l'exécution de différentes tâches: enregistrement de la commande, envoi d'un accusé de réception à l'expéditeur, transmission de la commande au responsable de la fabrication des meubles, etc.

Selon le mode de communication propre à chacune des personnes avec lesquelles cette secrétaire interagit, elle peut être amenée pour ces différentes actions de communication à utiliser chaque fois un outil de communication différent, et donc à démarrer à chaque fois un autre outil, à rechercher dans cet autre outil les coordonnées de la personne à contacter, et enfin à initier une nouvelle communication.

On connaît par exemple des outils unifiés pour la commande de messageries variées, par exemple Adium (http://www.maccast.com/2006/12/27/adium-6-reasons-to-switch-from-ichat/), Skype (http://web.archive.org/web/20071209215717/http://www.skype.com/download/ skype/macosx/) et Yahoo Messenger (http://en.wikipedia.org/w/index.php?title=Yahoo! _Messenger&oldid=176839651).

On connaît aussi des outils d'automatisation tels que Quicksilver (http://en.wikipedia.org/w/ index.php?title=Quicksilver_(software)&oldid=176687220) permettant de déclencher, à partir d'une même interface de commande, n'importe quelle action répondant à un format détérminé, en tenant compte de l'historique.

L'invention a pour but de fournir un dispositif et procédé de mise en œuvre d'outils de communication simplifiant, pour un utilisateur, l'usage de terminaux dotés d'une pluralité d'outils de communication et/ou d'outils bureautique.

L'invention concerne, selon un premier aspect, un dispositif selon la revendication 1.

Du fait d'une gestion centralisée et unifiée des événements de communication se produisant dans différents outils de communication, il est possible de mettre en oeuvre un moteur de traitement visant à proposer automatiquement une ou plusieurs actions de communication, et ce quel que soit l'outil dans lequel se produit l'événement et quel que soit l'outil nécessaire pour déclencher l'action de communication. Cela simplifie considérablement pour un utilisateur le déclenchement d'actions de communication.

Les moyens de gestion d'événements sont agencés pour mémoriser un historique des événements pour lesquels une dite notification a été reçue, ladite action étant déterminée à partir dudit historique.

L'action proposée prend en compte une ou plusieurs notifications ayant eu lieu: il est donc possible d'adapter l'action proposée à toute donnée mémorisée dans cet historique: la nature des événements, l'ordre des événements, la date des événements ou des notifications, etc.

Selon un mode de réalisation, l'action déterminée est susceptible d'être mise en oeuvre par un outil, éventuellement différent du ou des outils émetteurs des notifications reçues.

L'utilisateur est ainsi en mesure de passer d'un outil de communication à un autre outil, quel que soit le type de cet autre outil, par exemple un outil bureautique, et ce sans avoir à activer l'interface propre à cet autre outil.

Selon un autre mode de réalisation, les moyens de traitement sont conçus pour, en cas de notification relative à une communication reçue, déterminer au moins une action de communication à proposer à un utilisateur, ladite action de communication étant susceptible d'être exécutée au moyen d'un deuxième outil de communication, éventuellement différent de l'outil de communication émetteur de la notification.

L'utilisateur est ainsi en mesure de passer d'un outil de communication à un autre outil de communication sans avoir à activer l'interface propre à cet autre outil. En particulier, cela permet d'activer facilement un processus de mise en relation avec un contact émetteur d'une communication reçue.

Selon une variante de réalisation, le dispositif selon l'invention comprend des moyens de gestion d'interface pour, en cas de notification relative à une communication reçue, produire des éléments d'interface à présenter à un utilisateur, lesdits éléments d'interface étant conçus pour signaler ladite communication reçue en association avec ladite action proposée.

De manière intuitive et simple, l'utilisateur a connaissance de l'existence de l'action proposée et peut la déclencher directement sans avoir à activer une autre interface.

Selon une autre variante de réalisation, le dispositif selon l'invention comprend des moyens d'apprentissage pour, en fonction de l'historique, par lesdits moyens de gestion d'événements, déterminer au moins une règle de détermination d'action à appliquer par lesdits moyens de traitement.

Ceci permet une personnalisation du comportement des moyens de détermination d'action. La pertinence des actions proposées en est augmentée.

Selon encore une autre variante de réalisation, comprenant des moyens pour identifier une catégorie de contacts à laquelle appartient un contact émetteur de ladite communication reçue, les moyens de gestion d'interface utilisateur étant conçus pour produire lesdits éléments d'interface selon un mode de présentation associé à la catégorie de contact identifiée.

De manière visuelle ou sonore, l'utilisateur est informé de la catégorie du contact émetteur de la communication reçue et peut donc adapter son choix d'action de manière appropriée sans avoir à consulter une base de données de contact pour connaître la catégorie de contact concernée.

L'invention concerne, selon un deuxième aspect, un procédé selon la revendication 11.

Les avantages énoncés pour le dispositif selon l'invention sont transposables directement au procédé selon l'invention.

Selon une implémentation préférée, les différentes étapes du procédé selon l'invention sont mises en oeuvre par un logiciel ou programme d'ordinateur, ce logiciel comprenant des instructions logicielles destinées à être exécutées par un processeur de données d'un terminal ou dispositif de mise en oeuvre d'outils de communication, interagissant avec ces outils et conçu pour commander l'exécution des différentes étapes de ce procédé.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur ou processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon une autre implémentation, l'invention est mise en oeuvre au moyen de composants logiciels et/ou matériels. Dans cette optique, le terme module peut correspondre dans ce document aussi bien à un composant logiciel ou qu'à un composant matériel. Un composant logiciel correspond à un ou plusieurs programmes d'ordinateur, un ou plusieurs sous-programmes d'un programme, ou de manière plus générale à tout élément d'un programme conçu pour mettre en oeuvre une fonction ou un ensemble de fonctions. Un composant matériel correspond à tout élément d'un ensemble matériel (ou hardware) conçu pour mettre en oeuvre une fonction ou un ensemble de fonctions.

D'autres buts, caractéristiques et avantages de l'invention apparaîtront à travers la description qui va suivre, donnée uniquement à titre d'exemple non limitatif, et faite par référence aux dessins annexés dans lesquels:
- la figure 1 représente de manière schématique un système de communication intégrant un dispositif selon l'invention;
- la figure 2 représente un organigramme d'un mode de réalisation du procédé selon l'invention,
- les figures 3a et 3b représentent des exemples d'éléments d'interface utilisateur utilisés dans la mise en oeuvre de l'invention.

L'invention concerne la mise en oeuvre d'outils de communication et d'outils bureautique en général.

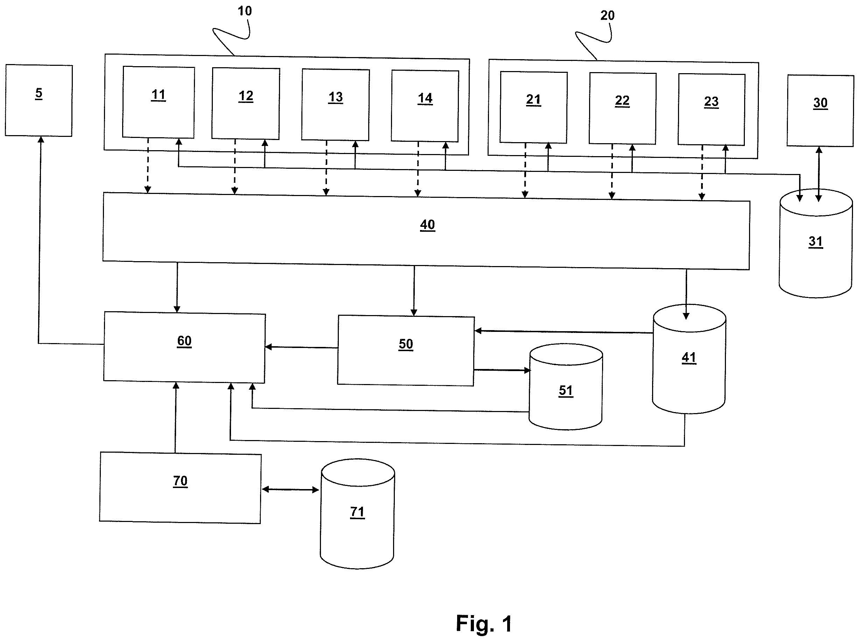

La figure 1 représente de manière schématique un système de communication intégrant un dispositif selon l'invention. Ce système comprend :
- un ensemble 10 d'outils de communication permettant à un utilisateur du système de communiquer au moyen de différents services de communication à travers au moins un réseau de télécommunication, cet ensemble 10 comprenant par exemple un outil 11 de messagerie électronique, un outil 12 d'édition, d'envoi et de réception de messages courts (de type SMS ou MMS, messages appelés également minimessages), un outil 13 de messagerie instantanée, un outil 14 de téléphonie sur IP, un outil de visiophonie sur IP (non représenté), un outil de travail collaboratif (non représenté); cette liste d'outils n'est pas exhaustive et est donnée uniquement à titre d'exemple, l'invention étant applicable quelque soit la nature et le nombre de ces outils; en pratique, l'utilisateur a la possibilité de sélectionner, parmi une liste d'outils disponibles, ceux qu'il souhaite intégrer ou non dans son espace de travail;
- un ensemble 20 d'outils bureautique permettant à un utilisateur d'éditer différents types de documents électroniques, cet ensemble 20 comprenant un outil 21 d'édition et de traitement de textes, un outil 22 d'édition de tableaux de calcul, un outil 23 d'édition et de traitement d'images;
- une base de données 31 commune, partagée par les outils des ensembles 10 et 20, servant au stockage de données générés par l'utilisateur lors de l'utilisation de ces différents outils;
- un outil 30 d'accès à la base de données 31;
- un module 40 de gestion d'événements pour la gestion d'événements se produisant dans les outils des ensembles 10 et 20;
- une base de données 41 pour le stockage de données décrivant les événements gérés par le module 40 de gestion d'événements;
- un module 50 d'apprentissage pour la génération de règles de traitements à partir des événements mémorisés dans la base de données 41;
- une base de données 51 pour le stockage de données définissant les règles, générés par le module 50 d'apprentissage; cette base sera dénommée base de règles 51;
- un module 70 de gestion de présence pour la gestion de données de présence et de disponibilité;
- une base de données 71 pour le stockage de données de présence nécessaire au module 70 de gestion de présence;
- un module 60 de traitement, servant à la détermination d'actions, notamment d'actions de communication, à proposer à un utilisateur du système; ce module est dénommé également moteur de traitement;
- un module 5 d'interactivité, mettant en oeuvre une interface homme-machine d'activation de différentes fonctions des outils des ensembles 10 et 20.

La base de données 31 est une base de données multimédia. Elle comprend à la fois :
- des documents électroniques, tels que générés par les outils bureautique: il peut s'agir de textes, tableaux de calcul, images, graphiques, etc;
- des messages électroniques, que ce soit des courriels, des messages courts de type SMS ou MMS, des messages vocaux, etc;
- un annuaire de contacts, comprenant pour chaque contact une fiche d'information, cette fiche comprenant par exemple la ou les adresses électroniques via lequel ce contact est joignable, un ou plusieurs numéros de téléphone, une adresse postale, une photo, une catégorie de contact à laquelle appartient le contact concerné ou tout autre information.

La base de données 31 comprend en outre un moteur de recherche interne apte à mettre en oeuvre une recherche multicritère sur cet ensemble de documents hétérogènes.

La base de données 31 est accessible à travers un outil 30 d'accès à la base de données, comprenant des moyens d'éditions ou de consultation des éléments contenus dans cette base de données.

La base de données 31 est également accessible via les outils de communication 11 à 14 et 21 à 23 pour l'enregistrement ou l'extraction d'un document généré ou modifié ou à éditer au moyen de ces outils.

L'outil 30 d'accès à la base de données 31 permet à un utilisateur du système d'interroger la base de données 31, notamment d'effectuer une recherche au moyen du moteur de recherche de cette base de données.

L'outil 30 d'accès à la base de données 31 permet également à un utilisateur du système d'éditer et de consulter le contenu de cette base de données.

En ce qui concerne, l'annuaire des contacts, l'outil 30 d'accès à la base de données permet de définir des catégories de contact pour l'ensemble des contacts contenus dans l'annuaire. Un utilisateur est ainsi en mesure d'affecter une catégorie à chacun de ses contacts et de nommer ces catégories, par exemple : "contacts personnels", "fournisseurs", "sous-traitants", "clients", etc.

En complément, chacun des outils de communication 11 à 14 est conçu pour permettre une édition et une consultation de l'annuaire des contacts.

Le module 40 de gestion d'événements interagit avec les différents outils 11 à 14, 21 à 23 et 30.

S'agissant des outils de communication 11 à 14, le module 40 de gestion d'événements est conçu pour recevoir de l'un quelconque de ces outils de communication une notification relative à un événement se produisant dans l'outil de communication émetteur de la notification. Cet événement est relatif soit à une communication entrante reçue par l'outil de communication émetteur de la notification, soit à une action déclenchée au moyen de l'outil de communication émetteur de la notification par un utilisateur de cet outil.

Un événement relatif à une communication entrante est par exemple:
- la réception d'un courriel,
- la réception d'un message court,
- la réception d'un message vocal,
- la réception d'un facsimilé,
- la réception d'un appel téléphonique ou visiophonique,
- l'enregistrement d'un message vocal suite à un appel téléphonique manqué,
- la réception d'une demande de mise en relation par messagerie instantanée,
- la réception d'une demande de mise en relation par session de travail collaboratif.

La liste donnée ici n'est pas exhaustive et le nombre et le type d'événements à surveiller dépend des possibilités offertes par les outils de communication mis à disposition des utilisateurs du système.

Un événement relatif à une action déclenchée par un utilisateur au moyen d'un outil de communication est par exemple:
- la lecture ou l'envoi d'un courriel, que ce soit par transfert d'un message précédent ou par réponse à un message précédent,
- la lecture ou l'envoi d'un message court, que ce soit par transfert d'un message précédent ou par réponse à un message précédent,
- l'envoi d'un facsimilé,
- le déclenchement d'un appel téléphonique ou visiophonique,
- l'envoi d'une demande de mise en relation par messagerie instantanée,
- l'envoi d'une demande de mise en relation par session de travail collaboratif,
- l'enregistrement ou l'extraction d'un élément dans la base de données 31.

Ces actions peuvent ou non être déclenchées en réponse à un événement relatif à une communication entrante. La liste donnée ici n'est pas exhaustive et le nombre et le type d'événements à surveiller dépend des possibilités offertes par les outils de communication mis à disposition des utilisateurs du système.

S'agissant des outils bureautiques 21 à 23, le module 40 de gestion d'événements est conçu pour recevoir de l'un quelconque de ces outils bureautique une notification relative à une action déclenchée par un utilisateur au moyen de l'outil bureautique émetteur de la notification.

Un événement relatif à une action déclenchée par un utilisateur au moyen d'un outil bureautique est par exemple:
- l'ouverture d'un document en vue de son édition ou de sa consultation,
- l'enregistrement ou l'extraction d'un élément dans la base de données 31.

La liste donnée ici n'est pas exhaustive et le nombre et le type d'événements à surveiller dépend des possibilités offertes par les outils bureautique mis à disposition des utilisateurs du système.

S'agissant de l'outil 30 d'accès à la base de données, le module 40 de gestion d'événements est conçu pour recevoir de l'un quelconque de ces outils bureautique une notification relative à une action déclenchée par un utilisateur au moyen de l'outil 30 d'accès à la base de données.

Un événement relatif à une action déclenchée par un utilisateur au moyen de l'outil 30 d'accès à la base de données est par exemple:
- l'enregistrement ou l'extraction d'un élément dans la base de données 31,
- le déclenchement d'une recherche dans la base de données 31.

Le module 40 de gestion d'événements enregistre dans la base de données 41 un historique des notifications qu'il reçoit. Pour chaque notification reçue, le module 40 de gestion d'événements enregistre en association les informations suivantes:
- une identification de l'outil émetteur de la notification,
- un code ou une description de l'événement ou de l'action ayant donné lieu à la notification,
- une catégorie d'événement, respectivement d'action, associée l'événement ou à l'action ayant donné lieu à la notification,
- une information de date et heure indiquant quand a eu lieu l'événement ou l'action ayant donné lieu à la notification.

Cet historique sert donc d'historique des événements notifiés.

La catégorie d'événement sert à définir des ensembles d'événements pour lesquels un traitement unique est à prévoir. Des exemples de catégories possibles sont :
- la catégorie "réception d'un message", comprenant par exemple les événements suivants: réception d'un courriel, réception d'un message court, réception d'un message vocal et réception d'un facsimilé;
- la catégorie "édition d'un document", comprenant par exemple l'événement suivant: édition d'un élément de la base de données 31;
- la catégorie "modification des propriétés d'un document", comprenant par exemple un des événements suivants : modification de la version d'un document traitement de texte partagé, modification du nom du document, modification de sa date ou de toute autre propriété;
- la catégorie "envoi d'un message", comprenant par exemple les événements suivants: envoi d'un courriel, envoi d'un message court, envoi d'un message vocal et envoi d'un facsimilé.

Selon le besoin, une autre manière de définir des catégories d'événement est bien sûr envisageable.

Le module 50 d'apprentissage est conçu pour déterminer, à partir de l'historique généré par le module 40 de gestion d'événements, une ou plusieurs règles de détermination d'action à appliquer par le module 60 de traitement. En d'autres termes, il détecte, si, de manière répétée ou en tout cas un nombre prédéterminé de fois, suite à un événement appartenant à une catégorie donnée ou associé à un code donné ou relatif à un contact d'une catégorie donnée, une action appartenant à une catégorie donnée ou associé à un code donné est accomplie par l'utilisateur. En cas de détection d'une telle situation, le module 50 d'apprentissage est conçu pour enregistrer, dans la base de règles 51, une règle définissant une association entre d'une part un événement appartenant à une catégorie donnée ou associé à un code donné ou relatif à un contact d'une catégorie donnée, et d'autre part une action appartenant à une catégorie donnée ou associé à un code donné est accomplie par l'utilisateur.

La base de règles 51 est conçue pour stocker également des règles définies par défaut. Les règles définies par apprentissage, par le module 50 d'apprentissage, sont appelées ici "règles utilisateur" tandis que les règles par défaut sont appelées "règles administrateur".

Le module 70 de gestion de présence forme un serveur de données de présence. En particulier, le module 70 de gestion de présence est conçu pour enregistrer dans la base de données 71, pour au moins une partie des contacts de l'annuaire stocké dans la base de données 31, et au moins une partie des services de communication susceptibles d'être utilisé au moyen des outils 11 à 14 de communication, une information indiquant si le contact chaque fois considéré est joignable via le service considéré.

De manière connue, une information enregistrée par un tel serveur est soit une information binaire indiquant si oui ou non un contact est joignable, soit une information indiquant un état de disponibilité, comme cela est connu pour les services de messagerie instantanée: par exemple "disponible", "occupé", "ne pas déranger", "non connecté", etc.

Le module 60 de traitement est conçu pour déterminer une ou plusieurs actions à proposer à un utilisateur du système en fonction des notifications reçues par le module 40 de gestion d'événements, et cela que cette action soit ou non susceptible d'être mise en oeuvre par le ou les outils émetteur de ces notifications.

En particulier, le module 60 de traitement est conçu pour, en cas de notification relative à une communication entrante, déterminer au moins une action à proposer audit utilisateur, cette action étant susceptible d'être exécutée au moyen d'un outil de communication ou d'un outil bureautique éventuellement différent de celui émetteur de la notification relative à la communication entrante.

Différents facteurs sont susceptibles d'intervenir dans la détermination de l'action à proposer à un utilisateur.

En cas de notification relative à une communication entrante, un premier facteur est l'état de présence du ou des contacts à l'origine de la communication entrante. Le module 60 de traitement est ainsi conçu pour déterminer une ou plusieurs actions de communication à proposer, en fonction d'un ou de plusieurs services de communication au moyen desquels un contact émetteur de ladite communication entrante est joignable. Dans ce but, le module 60 de traitement interroge le module 70 de gestion de présence afin d'obtenir des informations sur l'état de présence du ou des contacts concernés et propose une ou plusieurs actions de communication destinées à être mises en oeuvre au moyen d'un ou plusieurs services de communication via lesquels ce ou ces contacts sont joignables ou disponibles.

En cas de notification relative à une communication entrante, un deuxième facteur est la catégorie de contacts à laquelle appartient un contact émetteur de cette communication entrante. Le module 60 de traitement est ainsi conçu pour déterminer une ou plusieurs actions à proposer, en fonction de la catégorie de contact identifiée. Dans ce but, le module 60 de traitement comprend un module pour identifier, à partir de l'annuaire des contacts stockés dans la base de données 31, une catégorie de contact à laquelle appartient un contact émetteur de cette communication entrante et pour déterminer l'action à proposer en fonction de la catégorie de contact identifiée. Par exemple, à réception d'un courriel en provenance d'un contact appartenant à la catégorie de contact "fournisseurs", une action par défaut sera de proposer un envoi d'un document par fax formant accusé de réception.

Dans le cas général, le module 60 de traitement détermine une ou des actions à proposer, en fonction du ou des derniers événements notifiés et en fonction de règles stockées dans la base de règles 51. Lors de cette détermination, le module 60 de traitement utilise en priorité une "règle utilisateur", s'il en existe au moins une, sinon une "règle administrateur".

Le module 5 d'interactivité est conçu pour, suite à la détermination d'une ou plusieurs actions par le module 60 de traitement, produire des éléments d'interface utilisateur à présenter à un utilisateur du système afin de lui permettre de sélectionner, parmi la ou les actions déterminées, une ou plusieurs actions et de déclencher les actions sélectionnées. Ces éléments d'interface sont par exemple sous forme de fenêtres dialogue, de messages vocaux, d'icones, etc. Toute forme d'interface utilisateur appropriée est envisageable.

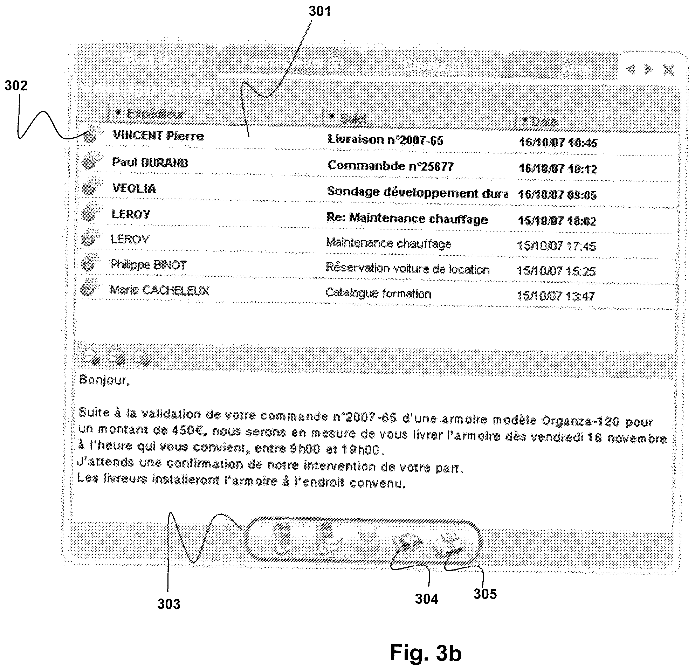

Lorsqu'une action est proposée suite à un événement relatif à une communication entrante, les éléments d'interface produits sont conçus pour signaler cette communication entrante en association avec la ou les actions déterminées par le module 60 de traitement. Comme illustré par exemple à la figure 3b, à réception d'un courriel, si l'action à proposer est d'envoyer un fax, une fenêtre de dialogue comprendra d'une part des éléments d'interface utilisateur 301 signalant la réception du courriel et d'autre part, des éléments d'interface utilisateur 302 permettant d'ouvrir un menu proposant une liste d'actions. Les éléments graphiques 301 et 302 sont destinés à être affichés simultanément et à proximité l'un de l'autre pour indiquer l'association existant entre l'événement signalé et l'action proposée.

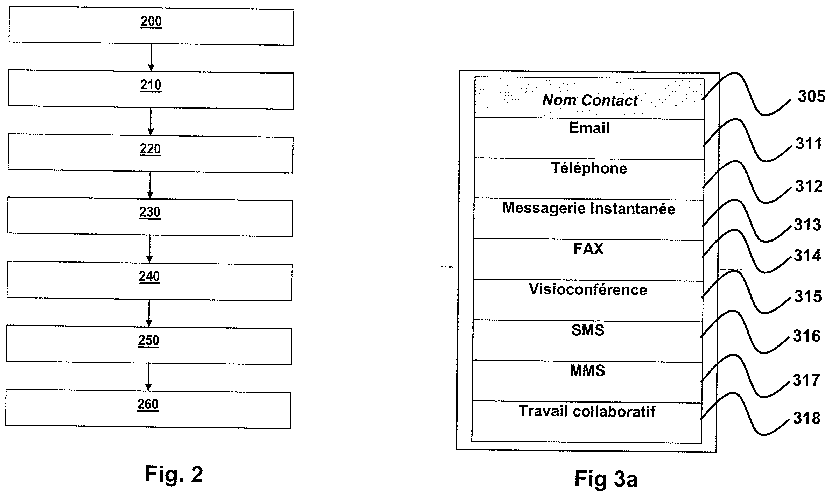

Le menu se présente par exemple sous forme d'un ensemble de logos, chaque logo étant associé à un outil de communication, l'outil de communication pour lequel une action a été déterminée - en l'occurrence l'outil d'édition de fax - étant présélectionné par défaut. L'ensemble de logos se présente par exemple sous la forme de l'ensemble 303 d'éléments graphiques représenté à la figure 3. Le fait de cliquer sur l'un de ces logos déclenche, au moyen de l'outil associé, une action de communication (envoi de message, appel, etc) avec le contact émetteur du message.

Avantageusement, seuls sont activables au moyen de ces logos les outils de communication via lesquels, selon les données fournies par le module 70 de gestion de présence, ce contact est joignable. Certains des logos peuvent donc être affichés selon un mode d'affichage particulier indiquant que l'outil de communication associé n'est pas activable pour ce contact. On évite ainsi que l'utilisateur tente de joindre inutilement un contact donné.

En cas d'action proposée suite à un événement relatif à une communication entrante, le module 5 d'interactivité est conçu pour produire ces éléments d'interface utilisateur selon un mode de présentation associé à la catégorie de contact identifiée. Par exemple, lorsqu'un courriel reçu a été émis par un contact appartenant à la catégorie "fournisseurs", et que le mode de présentation associé à cette catégorie implique l'utilisation de pictogrammes prédéfinis, représentatifs de cette catégorie, ou d'une couleur prédéfinie, ce courriel ainsi que la ou les actions associées seront affichés en utilisant ces pictogrammes ou cette couleur.

De préférence, les éléments d'interface utilisateur produits par le module 5 d'interactivité sont présentés automatiquement à l'utilisateur dès l'occurrence de l'événement associé.

Lorsque les éléments d'interface utilisateur produits, sont des éléments destinés à être affichés, ces éléments sont de préférence affichés dans l'interface utilisateur de l'outil dans lequel a eu lieu l'événement dont l'occurrence a été notifiée au module 40 de gestion d'événements.

Le module 5 d'interactivité est également conçu pour être activé sur demande d'un utilisateur, c'est-à-dire indépendamment de l'occurrence d'un événement dans l'un des outils 11 à 14 ou 21 à 23. Il a ainsi pour fonction de faciliter l'établissement d'une communication avec un ou plusieurs contacts, en proposant un accès centralisé aux différents services de communication.

Comme illustré par exemple à la figure 3b, un ensemble 303 d'éléments graphiques sont affichés - soit en permanence, soit sur demande - sur un écran de manière à permettre l'activation manuelle du module d'interactivité. Ces éléments graphiques comprennent par exemple différents logos correspondant chacun à un mode d'activation.

Lorsque le logo est représentatif d'un des outils de communication, comme c'est le cas par exemple sur la figure 3b du logo 305, le fait de sélectionner et cliquer sur ce logo provoque l'activation de l'outil de communication associé.

Lorsque le logo représente par exemple une carte de visite, comme c'est le cas sur la figure 3b du logo 304, le fait de sélectionner et cliquer sur ce logo provoque le déclenchement d'une interface qui permet l'activation d'un outil ou de plusieurs outils de communication sélectionnés en fonction d'un nom ou identifiant de contact.

Dans ce but, le fait de sélectionner et cliquer sur le logo 304 provoque la production par le module 5 d'interactivité d'éléments d'interface utilisateur à présenter à un utilisateur du système afin de lui permettre successivement :
- de visualiser l'ensemble des contacts de l'annuaire des contacts,
- de sélectionner un ou plusieurs contacts dans cet ensemble,
- d'afficher et d'éditer la fiche d'information associée à un contact sélectionné,
- d'afficher une liste d'au moins une action de communication possible pour un contact sélectionné,
- de sélectionner une action de communication dans la liste affichée,
- et de déclencher l'action sélectionnée.

Dans ce but, le module 5 d'interactivité interroge le module 70 de gestion de présence afin d'obtenir des informations sur l'état de présence du ou des contacts concernés et propose une ou plusieurs actions de communication destinées à être mises en oeuvre au moyen d'un ou plusieurs services de communication via lesquels ce ou ces contacts sont joignables ou disponibles.

Afin qu'un utilisateur puisse sélectionner parmi les actions proposées au moins une action à exécuter et déclencher cette action, des éléments d'interface utilisateur sont proposés à cet utilisateur, par exemple sous la forme représentée à la figure 3a, c'est-à-dire sous la forme d'une liste d'actions 311 à 318 et en association avec un élément d'interface 305 identifiant le contact concerné. Ces éléments d'interface utilisateur sont affichés de préférence dans un cadre présent dans l'interface de l'outil utilisé de façon à éviter une surcharge de l'espace de travail de l'utilisateur, ce cadre s'affichant spontanément sans qu'une action d'un utilisateur soit nécessaire pour cela.

De préférence, lors qu'un mode de présentation (pictogramme prédéfini, couleur(s) prédéfinie(s), charte graphique, etc) a été défini pour une catégorie de contact, l'affichage d'information sur ce contact ainsi que les éléments d'interface utilisateur associés aux actions proposées pour ce contact s'effectue selon ce mode de présentation.

De préférence, des éléments d'interface utilisateur sont apparents en permanence, quels que soient les outils de communication activés, de manière à permettre à un utilisateur d'activer à tout moment le module 5 d'interactivité.

La **figure 2** représente un organigramme d'un mode de réalisation du procédé selon l'invention. Ce mode de réalisation correspond à un enchaînement possible des étapes exécutées par les différents modules intervenant dans la mise en œuvre du procédé. Un ordre différent est cependant envisageable pour ces étapes, dans la mesure où chacun des ces modules est en mesure de remplir la ou les fonctions pour lesquelles il est conçu.

A l'étape 200, un courriel est reçu dans l'outil 11 de messagerie électronique.

A l'étape 210, l'outil 11 de messagerie électronique notifie au module 40 de gestion d'événements l'occurrence d'un événement relatif à une communication entrante, c'est-à-dire la réception du courriel à l'étape 200. Le module 40 de gestion d'événements enregistre ensuite cet événement dans la base de données 41 comprenant un historique des événements signalés.

A l'étape 220, le module 40 de gestion d'événements active le module 50 d'apprentissage en vue de la mise à jour des règles de la base de règes 51 à partir de l'historique des événements mis à jour à l'étape 210. Le module 50 d'apprentissage analyse cet historique et génère si besoin une nouvelle règle qu'il stocke dans la base de règles 51.

A l'étape 230, le module 40 de gestion d'événements active le module 60 de traitement en vue de la détermination d'une action à proposer à l'utilisateur. Le module 60 de traitement détermine une ou plusieurs actions à proposer en fonction de la catégorie de contact à laquelle appartient le contact émetteur du courriel et/ou en fonction des règles définies dans la base de règes 51 et/ou en fonction des informations de présence ou de disponibilité fournies pour le contact émetteur du courriel. On suppose ici que différentes actions de communication sont proposées à l'utilisateur afin de joindre le contact émetteur du courriel au moyen de différents services de communication, par exemple appeler ce contact au moyen d'une communication téléphonique. En complément d'une action de communication, une action d'édition d'un document au moyen d'un outil bureautique pourrait être proposée.

A l'étape 240, le module 5 d'interactivité génère les éléments graphiques destinés à être présentés à un utilisateur du système en vue de lui signaler l'arrivée du courriel et de lui proposer simultanément les actions déterminées à l'étape 230. Ces éléments sont générés conformément à un mode de représentation associé à la catégorie de contact à laquelle appartient le contact émetteur du courriel. Ces éléments graphiques sont ensuite présentés à l'utilisateur au moyen d'une interface utilisateur appropriée.

A l'étape 250, l'utilisateur sélectionne, au moyen d'un outil de sélection, les éléments graphiques lui permettant d'ouvrir et de lire le courriel.

A l'étape 260, l'utilisateur choisit parmi les actions de communication proposées une action possible: il choisit par exemple d'appeler ce contact au moyen d'une communication téléphonique. Dans ce but, l'utilisateur sélectionne les éléments graphiques lui permettant de déclencher l'action de communication qu'il a choisie. Dans l'exemple décrit, la sélection a pour effet de déclencher l'établissement d'une communication téléphonique avec le contact émetteur du courriel.

L'invention est applicable à différentes architectures, notamment à une mise en oeuvre en mode local ou mode terminal / ordinateur hôte, ainsi qu'à une mise en oeuvre en mode client / serveur.

Dans le premier cas, l'invention a pour objet un terminal de télécommunication comprenant un dispositif selon l'invention ainsi qu'une interface utilisateur pour présenter à un utilisateur, pour chacun des outils de communication, des moyens d'interface pour commander la mise en oeuvre de ces outils de communication.

Dans le deuxième cas, la liaison entre le dispositif client (terminal) et le dispositif serveur s'effectue par exemple à travers une liaison de communication établie à travers un réseau de télécommunication, par exemple à travers le réseau Internet.

Dans ce deuxième cas, l'invention a pour objet un système de télécommunication comprenant
- d'une part un dispositif selon l'invention, ce dispositif formant un dispositif serveur et étant apte à recevoir des requêtes en provenance d'un terminal pour commander la mise en œuvre des outils de communication,
- d'autre part un terminal doté d'une interface utilisateur pour présenter à un utilisateur, pour chacun des outils de communication, des moyens d'interface pour commander un envoi d'une requête au dispositif serveur.

L'invention s'applique tout particulièrement bien à une mise en œuvre au moyen de technologies dite "Web 2.0", puisque dans ce cas l'ensemble des traitements est effectué côté serveur, la mise en œuvre côté terminal requérant uniquement un navigateur Internet. Aucune adaptation du terminal n'est donc nécessaire.

## Revendications

1. Dispositif (40, 60) de mise en œuvre d'une pluralité d'outils (11, 12, 13, 14) de communication mis à disposition d'un utilisateur, le dispositif comprenant
- des moyens de gestion d'événements (40) agencés pour recevoir, en provenance de l'un quelconque desdits outils de communication (11, 12, 13, 14), au moins une première notification signalant une occurrence d'un événement se produisant dans l'outil de communication (11) émetteur de la notification, ledit événement étant une réception par un dit outil d'une communication (11),
lesdits moyens de gestion d'événements (40) étant agencés pour recevoir, en provenance de l'un quelconque desdits outils de communication (11, 12, 13, 14), au moins une deuxième notification signalant une occurrence d'un événement se produisant dans l'outil de communication (11) émetteur de la notification, ledit événement étant un déclenchement d'une action par un utilisateur d'un dit outil (21),
lesdits moyens de gestion d'événements (40) étant agencés pour mémoriser un historique des événements pour lesquels une première ou deuxième notification a été reçue,
- des moyens de traitement (60) pour déterminer, suite à une réception d'une troisième notification, à partir dudit historique, au moins une action à proposer audit utilisateur.

2. Dispositif selon la revendication 1, comprenant des moyens d'apprentissage (50) pour, en fonction dudit historique, déterminer au moins une règle de détermination d'action à appliquer par lesdits moyens de traitement (60).

3. Dispositif selon l'une quelconque des revendications 1 à 2, dans lequel une dite action est susceptible d'être mise en œuvre par un outil différent du ou des outils émetteurs des notifications reçues.

4. Dispositif selon l'une quelconque des revendications 1 à 3, dans lequel les moyens de traitement (60) sont conçus pour, en cas de la première notification relative à une communication reçue, déterminer au moins une action de communication à proposer à un utilisateur, ladite action de communication étant susceptible d'être exécutée au moyen d'un deuxième outil de communication (12), éventuellement différent de l'outil de communication (11) émetteur de la première notification.

5. Dispositif selon l'une quelconque des revendications 1 à 4, comprenant des moyens pour identifier une catégorie de contacts à laquelle appartient un contact émetteur de ladite communication reçue, ladite action étant fonction de la catégorie identifiée.

6. Dispositif selon l'une quelconque des revendications 1 à 5, comprenant des moyens de gestion d'interface (5) pour, en cas de la première notification relative à une communication reçue, produire des éléments d'interface à présenter à un utilisateur, lesdits éléments d'interface étant conçus pour signaler ladite communication reçue en association avec ladite action proposée.

7. Dispositif selon la revendication 6, comprenant des moyens pour identifier une catégorie de contacts à laquelle appartient un contact émetteur de ladite communication reçue, les moyens de gestion d'interface utilisateur (5) étant conçus pour produire lesdits éléments d'interface selon un mode de présentation associé à la catégorie de contact identifiée.

8. Dispositif selon l'une quelconque des revendications 4 à 7, dans lequel les moyens de traitement (60) sont conçus pour déterminer ladite action de communication en fonction d'un ou de plusieurs services de communication au moyen desquels un contact émetteur de ladite communication reçue est joignable.

9. Système de télécommunication comprenant
- un dispositif (40, 60) selon l'une quelconque des revendications 1 à 8, ledit dispositif étant apte à recevoir des requêtes en provenance d'un terminal pour commander la mise en œuvre desdits outils de communication (11, 12, 13, 14),
- un terminal doté d'une interface utilisateur pour présenter à un utilisateur, pour chacun desdits outils de communication, des moyens d'interface pour commander un envoi d'une dite requête audit dispositif (40, 60).

10. Terminal de télécommunication comprenant
- un dispositif (40, 60) selon l'une quelconque des revendications 1 à 8,
- une interface utilisateur pour présenter à un utilisateur, pour chacun desdits outils de communication (11, 12, 13, 14), des moyens d'interface pour commander la mise en œuvre desdits outils de communication.

11. Procédé de mise en œuvre par un dispositif (40, 60) d'une pluralité d'outils (11, 12, 13, 14) de communication mis à disposition d'un utilisateur, le procédé comprenant
- une étape de réception (210), en provenance de l'un quelconque desdits outils de communication, d'au moins une première notification signalant une occurrence d'un événement se produisant dans l'outil de communication (11) émetteur de la notification, ledit événement étant une réception, par un dit outil d'une communication (11),
- une étape de réception (210), en provenance de l'un quelconque desdits outils de communication, d'au moins une deuxième notification signalant une occurrence d'un événement se produisant dans l'outil de communication (11) émetteur de la notification, ledit événement étant un déclenchement d'une action par un utilisateur au moyen d'un dit outil (21),
- une étape de mémorisation d'un historique des événements (210) pour lesquels une première ou deuxième notification a été reçue,
- une étape de détermination (230), suite à une réception d'une troisième notification, à partir dudit historique, d'au moins une action à proposer audit utilisateur.

12. Procédé selon la revendication 11, comprenant, une étape de détermination (240), en fonction de la ou des notifications reçues, au moins une action à proposer à un utilisateur, ladite au moins une action étant susceptible d'être mise en œuvre par un outil, éventuellement différent du ou des outils émetteurs des notifications reçues.

13. Programme informatique comprenant des instructions logicielles pour la mise en œuvre d'un procédé selon l'une des revendications 11 à 12 lorsque ledit programme est exécuté par un processeur de données.

14. Support d'enregistrement lisible par un processeur de données sur lequel est enregistré un programme comprenant des instructions de code de programme pour l'exécution des étapes d'un procédé selon l'une des revendications 11 à 12.

## Patentansprüche

1. Vorrichtung (40, 60) zum Einsatz einer Mehrzahl von Kommunikationswerkzeugen (11, 12, 13, 14), die einem Benutzer zur Verfügung gestellt sind, die Vorrichtung umfassend
- Ereignisverwaltungsmittel (40), die angeordnet sind, von einem beliebigen der Kommunikationswerkzeuge (11, 12, 13, 14) mindestens eine erste Benachrichtigung zu empfangen, die einen Eintritt eines Ereignisses angibt, das in dem Kommunikationswerkzeug (11) auftritt, das die Benachrichtigung sendet, wobei das Ereignis ein Empfang durch eines der Kommunikationswerkzeuge (11) ist,
wobei die Ereignisverwaltungsmittel (40) angeordnet sind, von einem beliebigen der Kommunikationswerkzeuge (11, 12, 13, 14) mindestens eine zweite Benachrichtigung zu empfangen, die einen Eintritt eines Ereignisses angibt, das in dem Kommunikationswerkzeug (11) auftritt, das die Benachrichtigung sendet, wobei das Ereignis eine Auslösung einer Aktion durch einen Benutzer eines der Werkzeuge (21) ist,
wobei die Ereignisverwaltungsmittel (40) angeordnet sind, einen Verlauf der Ereignisse zu speichern, für welche eine erste oder zweite Benachrichtigung empfangen wurde,
- Verarbeitungsmittel (60) um nach einem Empfang einer dritten Benachrichtigung ausgehend von dem Verlauf mindestens eine Aktion zu bestimmen, die dem Benutzer vorgeschlagen werden soll.

2. Vorrichtung nach Anspruch 1, umfassend Lernmittel (50) zur Bestimmung, in Abhängigkeit von dem Verlauf, mindestens einer Aktionsbestimmungsregel, die durch die Verarbeitungsmittel (60) anzuwenden sind.

3. Vorrichtung nach einem der Ansprüche 1 bis 2, wobei eine der Aktionen von einem Werkzeug durchgeführt werden kann, das von dem oder den Werkzeugen, die die empfangenen Benachrichtigungen senden, verschieden ist.

4. Vorrichtung nach einem der Ansprüche 1 bis 3, wobei die Verarbeitungsmittel (60) ausgelegt sind, bei der ersten Benachrichtigung bezogen auf eine empfangene Kommunikation mindestens eine Kommunikationsaktion zu bestimmen, die einem Benutzer vorgeschlagen werden soll, wobei die Kommunikationsaktion durch mindestens ein zweites Kommunikationswerkzeug (12) ausgeführt werden kann, das möglicherweise von dem Kommunikationswerkzeug (11), das die erste Benachrichtigung sendet, verschieden ist.

5. Vorrichtung nach einem der Ansprüche 1 bis 4, umfassend Mittel zur Identifizierung einer Kategorie von Kontakten, zu welcher ein Kontakt gehört, der die empfangene Kommunikation sendet, wobei die Aktion von der identifizierten Kategorie abhängig ist.

6. Vorrichtung nach einem der Ansprüche 1 bis 5, umfassend Schnittstellenverwaltungsmittel (5), um bei der ersten Benachrichtigung bezogen auf eine empfangene Kommunikation Schnittstellenelemente zu erzeugen, die einem Benutzer präsentiert werden sollen, wobei die Schnittstellenelemente ausgelegt sind, die empfangene Kommunikation in Verbindung mit der vorgeschlagen Aktion anzugeben.

7. Vorrichtung nach Anspruch 6, umfassend Mittel zur Identifizierung einer Kategorie von Kontakten, zu welcher ein Kontakt gehört, der die empfangene Kommunikation sendet, wobei die Schnittstellenverwaltungsmittel (5) ausgelegt sind, die Schnittstellenelemente nach einem Präsentationsmodus zu erzeugen, der der identifizierten Kontaktkategorie zugeordnet ist.

8. Vorrichtung nach einem der Ansprüche 4 bis 7, wobei die Verarbeitungsmittel (60) ausgelegt sind, die Kommunikationsaktion in Abhängigkeit von einem oder mehreren Kommunikationsdiensten zu bestimmen, mittels welcher ein Kontakt, der die empfangene Kommunikation sendet, erreichbar ist.

9. Telekommunikationssystem umfassend
- eine Vorrichtung (40, 60) nach einem der Ansprüche 1 bis 8, wobei die Vorrichtung geeignet ist, Anfragen von einem Endgerät zu empfangen, um den Einsatz der Kommunikationswerkzeuge (11, 12, 13, 14) zu steuern,
- ein Endgerät, das mit einer Benutzerschnittstelle versehen ist, um einem Benutzer für jedes der Kommunikationswerkzeuge Schnittstellenmittel zu präsentieren, um eine Sendung einer der Anfragen an die Vorrichtung (40, 60) zu steuern.

10. Telekommunikationsendgerät umfassend
- eine Vorrichtung (40, 60) nach einem der Ansprüche 1 bis 8,
- eine Benutzerschnittstelle, um einem Benutzer für jedes der Kommunikationswerkzeuge (11, 12, 13, 14) Schnittstellenmittel zu präsentieren, um den Einsatz der Kommunikationswerkzeuge zu steuern.

11. Verfahren zum Einsatz, durch eine Vorrichtung (40, 60), einer Mehrzahl von Kommunikationswerkzeugen (11, 12, 13, 14), die einem Benutzer zur Verfügung gestellt sind, das Verfahren umfassend
- einen Schritt des Empfangens (210), von einem beliebigen der Kommunikationswerkzeuge, mindestens einer ersten Benachrichtigung, die einen Eintritt eines Ereignisses angibt, das in dem Kommunikationswerkzeug (11) auftritt, das die Benachrichtigung sendet, wobei das Ereignis ein Empfang, durch eines der Kommunikationswerkzeuge (11) ist,
- einen Schritt des Empfangens (210), von einem beliebigen der Kommunikationswerkzeuge, mindestens einer zweiten Benachrichtigung, die einen Eintritt eines Ereignisses angibt, das in dem Kommunikationswerkzeug (11) auftritt, das die Benachrichtigung sendet, wobei das Ereignis eine Auslösung einer Aktion durch einen Benutzer mittels eines der Werkzeuge (21) ist,
- einen Schritt des Speicherns eines Verlaufs der Ereignisse (210), für welche eine erste oder zweite Benachrichtigung empfangen wurde,
- einen Schritt des Bestimmens (230), nach einem Empfang einer dritten Benachrichtigung, ausgehend von dem Verlauf, mindestens einer Aktion, die dem Benutzer vorgeschlagen werden soll.

12. Verfahren nach Anspruch 11, umfassend einen Schritt des Bestimmens (240), in Abhängigkeit von der oder den empfangenen Benachrichtigungen, mindestens einer Aktion, die einem Benutzer vorgeschlagen werden soll, wobei die mindestens eine Aktion durch ein Werkzeug durchgeführt werden kann, das möglicherweise von dem oder den Werkzeugen, die die empfangenen Benachrichtigungen senden, verschieden ist.

13. Computerprogramm umfassend Softwareanweisungen für die Umsetzung eines Verfahrens nach einem der Ansprüche 11 bis 12, wenn das Programm von einem Datenprozessor ausgeführt wird.

14. Speichermedium, das von einem Datenprozessor gelesen werden kann, auf dem ein Programm gespeichert ist, das Programmcode-Anweisungen für die Ausführung der Schritte eines Verfahrens nach einem der Ansprüche 11 bis 12 umfasst.

## Claims

1. Device (40, 60) for implementing a plurality of communication tools (11, 12, 13, 14) made available to a user, the device comprising
- means for managing events (40) that are arranged to receive, from any one of said communication tools (11, 12, 13, 14), at least one first notification signalling an occurrence of an event taking place in the communication tool (11) transmitting the notification, said event being a reception by one said communication tool (11),
said event management means (40) being arranged to receive, from any one of said communication tools (11, 12, 13, 14), at least one second notification signalling an occurrence of an event taking place in the communication tool (11) transmitting the notification, said event being an action being triggered by a user of one said tool (21),
said event management means (40) being arranged to store a history of the events for which a first or second notification has been received,
- processing means (60) for determining, following a reception of a third notification, on the basis of said history, at least one action to be proposed to said user.

2. Device according to Claim 1, comprising learning means (50) for, according to said history, determining at least one rule for determining an action to be applied by said processing means (60) .

3. Device according to either of Claims 1 and 2, wherein one said action is suitable for being implemented by a different tool of the one or more tools transmitting the received notifications.

4. Device according to any one of Claims 1 to 3, wherein the processing means (60) are designed, in the case of the first notification relating to a received communication, to determine at least one communication action to be proposed to a user, said communication action being suitable for being executed by means of a second communication tool (12), which may differ from the communication tool (11) transmitting the first notification.

5. Device according to any one of Claims 1 to 4, comprising means for identifying a contact category to which a contact transmitting said received communication belongs, said action being dependent on the category identified.

6. Device according to any one of Claims 1 to 5, comprising interface management means (5) for, in the case of the first notification relating to a received communication, producing interface elements to be presented to a user, said interface elements being designed to signal said received communication in association with said proposed action.

7. Device according to Claim 6, comprising means for identifying a contact category to which a contact transmitting said received communication belongs, the user interface management means (5) being designed to produce said interface elements according to one presentation mode associated with the identified contact category.

8. Device according to any one of Claims 4 to 7, wherein the processing means (60) are designed to determine said communication action according to one or more communication services by means of which a contact transmitting said received communication is reachable.

9. Telecommunication system comprising
- a device (40, 60) according to any one of Claims 1 to 8, said device being capable of receiving requests from a terminal for controlling the implementation of said communication tools (11, 12, 13, 14),
- a terminal provided with a user interface for presenting to a user, for each of said communication tools, interface means for controlling a dispatch of one said request to said device (40, 60).

10. Telecommunication terminal comprising
- a device (40, 60) according to any one of Claims 1 to 8,
- a user interface for presenting to a user, for each of said communication tools (11, 12, 13, 14), interface means for controlling the implementation of said communication tools.

11. Method for a device (40, 60) to implement a plurality of communication tools (11, 12, 13, 14) made available to a user, the method comprising
- a step of receiving (210), from any one of said communication tools, at least one first notification signalling an occurrence of an event taking place in the communication tool (11) transmitting the notification, said event being a reception, by one said communication tool (11),
- a step of receiving (210), from anyone of said communication tools, at least one second notification signalling an occurrence of an event taking place in the communication tool (11) transmitting the notification, said event being an action being triggered by a user by means of one said tool (21),
- a step of storing a history of the events (210) for which a first or second notification has been received,
- a step of determining (230), following a reception of a third notification, on the basis of said history, at least one action to be proposed to said user.

12. Method according to Claim 11, comprising a step of determining (240), according to the one or more received notifications, at least one action to be proposed to a user, said at least one action being suitable for being implemented by a tool, which may be different from the one or more tools transmitting the received notifications.

13. Computer program comprising software instructions for implementing a method according to either of Claims 11 and 12 when said program is executed by a data processor.

14. Storage medium that is readable by a data processor on which a program is recorded that comprises program code instructions for executing the steps of a method according to either of Claims 11 and 12.
